Europäisches Patentamt

European Patent Office

Office européen des brevets

(19)

(11) Veröffentlichungsnummer: **0 158 095**
**B1**

(12) # EUROPÄISCHE PATENTSCHRIFT

(45) Veröffentlichungstag der Patentschrift:
**19.11.87**

(51) Int. Cl.⁴: **F 16 D 57/02, B 61 B 11/00**

(21) Anmeldenummer: **85102284.8**

(22) Anmeldetag: **01.03.85**

(54) **Bremse, insbesondere für Einziehvorrichtungen von Schleppseilen bei Schleppliften.**

(30) Priorität: **22.03.84 AT 961/84**

(43) Veröffentlichungstag der Anmeldung:
**16.10.85 Patentblatt 85/42**

(45) Bekanntmachung des Hinweises auf die Patenterteilung:
**19.11.87 Patentblatt 87/47**

(84) Benannte Vertragsstaaten:
**AT CH DE IT LI SE**

(56) Entgegenhaltungen:
**CH - A - 489 385**
**CH - A - 556 173**
**DE - A - 1 805 329**
**DE - A - 2 206 851**
**DE - A - 2 422 112**
**FR - A - 2 328 598**
**GB - A - 2 110 790**

(73) Patentinhaber: **KONRAD DOPPELMAYR & SOHN MASCHINENFABRIK GESELLSCHAFT M.B.H. & CO. KG., Rückenbachstrasse 10, A-6961 Wolfurt (AT)**

(72) Erfinder: **Mayer, Helmuth, Althaus 2, A-6911 Lochau (AT)**

(74) Vertreter: **Torggler, Paul, Dr. et al, Wilhelm-Greil-Strasse 16, A-6020 Innsbruck (AT)**

ACTORUM AG

## Beschreibung

Die Erfindung betrifft eine Bremse mit mindestens einem Bremsrotor, der in einem geschlossenen Rotorgehäuse läuft, in dem sich ein Arbeitsmedium befindet, wobei eine von der Drehrichtung des Bremsrotors abhängige Bremswirkung erfolgt, insbesondere für Einziehvorrichtungen von Schleppseilen bei Schleppliften.

Für Einziehvorrichtungen von Schleppseilen bei Schleppliften ist es üblich, eine Bremse mit unterschiedlicher Bremswirkung für das Auf- bzw. Abwickeln des Schleppseiles zu verwenden (z.B. CH-A-489 385 oder FR-A-2 328 598). Durch die Verwendung einer derartigen Bremse wird erreicht, dass der Skifahrer aus dem Stand ohne Anfahrstoss auf die Geschwindigkeit des Förderseiles beschleunigt wird. Um das Schleppseil möglichst schnell aber stossfrei einzuziehen, ist es vorteilhaft, wenn das Abbremsen in der Einholphase des Schleppseiles mit geringerer Bremswirkung erfolgt als in der Ausziehphase.

Es sind mechanische Fliehkraftbremsen bekannt, bei denen auf der zu bremsenden Welle Fliehgewichte und Bremsbacken angeordnet sind, welche bei steigender Umdrehungszahl der Welle gegen die Innenwand eines Bremsgehäuses gedrückt werden und damit ein Bremsmoment auf die Welle ausgeübt wird. Derartige Bremsen weisen jedoch neben der aufwendigen mechanischen Konstruktion den Nachteil auf, dass durch Eindringen von Feuchtigkeit und durch Vereisung keine gleichmässige Bremswirkung bei jeder Witterung gewährleistet ist und dass insbesondere die Bremsbeläge einem relativ grossen Verschleiss unterliegen. Nachteilig wirkt sich weiters aus, dass die Bremswirkung erst ab einer gewissen Drehzahl der zu bremsenden Welle eintritt.

Es sind auch klassische hydrodynamische Bremsen bekannt, bei denen Turbinenräder und Statoren in einem meist mit Öl gefüllten Gehäuse angeordnet sind. Diese Nachteile einer derartigen Einrichtung bestehen darin, dass zur Übertragung einer Bremsleistung auf das mit der zu bremsenden Welle verbundene Turbinenrad eine Strömung notwendig ist, wodurch auch hier die Bremswirkung erst ab einer bestimmten Drehzahl des Turbinenrades einsetzt, und darin, dass die Beschaufelung und das Gehäuse schwierig herzustellen und deren Änderungen, etwa zur Erzielung anderer Bremswirkungen, nur grosstechnisch möglich sind.

Wegen der geringen Bremswirkung der oben erwähnten Bremsen bei niedrigen Drehzahlen besteht die Gefahr, dass der Schleppbügel unbeabsichtigt etwa durch Rütteln an den Stützen, durch Wind oder in der Station durch Fliehkräfte ausgezogen wird und sich dadurch mit dem Förderseil oder sonstwo verhängt.

Weiters ist eine hydraulische Bremse (Wirbelbremse) bekannt geworden, bei der mehrere Rotoren in einem mit Öl gefüllten Gehäuse angeordnet sind und über ein Zahnradgetriebe von der zu bremsenden Welle angetrieben werden. Die unterschiedliche Bremswirkung je nach Drehrichtung der Welle wird dabei dadurch erreicht, dass einige Rotoren mit einem Freilauf in einer Richtung versehen sind. Abgesehen davon, dass die Zahnräder des Zahnradgetriebes nicht annähernd verschleissfrei sind, besteht ein weiterer Nachteil einer derartigen Bremse darin, dass der mehrteilige Aufbau sehr aufwendig ist.

Aufgabe der Erfindung war es daher, eine Bremse der eingangs genannten Art zu schaffen, die sich durch eine einfache Konstruktion ohne komplizierte Bauteile auszeichnet und bei der die Regelung der Bremswirkungen in beiden Drehrichtungen auf einfache Weise erfolgen kann. Weiters soll die Bremswirkung schon bei niederer Drehzahl der zu bremsenden Welle einsetzen und die Funktionsweise der Bremse durch Witterungseinflüsse nicht beeinträchtigt sein.

Dies wird erfindungsgemäss dadurch erreicht, dass das nur einen Teil des Gehäuseinneren einnehmende Arbeitsmedium zähfliessend ist, und dass die Schaufeln des Bremsrotors derart schräg zur Radialebene des Bremsrotors und/oder schräg zu dessen Drehachse gestellt sind, dass das zähfliessende Arbeitsmedium je nach Drehrichtung in Rotorgehäusebereiche unterschiedlicher Stau- bzw. Reibwirkung gedrängt wird.

Es ist zwar eine Bremse zum Abbremsen von fallenden Personen und Gegenständen bekannt geworden, welche ein nur einen Teil des Gehäuseinneren einnehmendes und zähflüssiges, in seiner Viskosität nicht näher definiertes Arbeitsmedium verwendet (CH-A-556 173). Die dort gezeigte, rein zentrifugal wirkende Bremse weist jedoch eine von der Drehrichtung des Bremsrotors unabhängige Bremswirkung auf und ist daher für das bevorzugte Anwendungsgebiet der erfindungsgemässen Bremse, nämlich Einziehvorrichtung von Schleppseilen bei Schleppliften, nicht geeignet.

Durch die Verwendung eines zähfliessenden Arbeitsmediums und der erfindungsgemässen Ausbildung der Schaufeln des Bremsrotors, erfolgt das Bremsprinzip nicht nach klassischen hydraulischen Gesetzen, sondern dadurch, dass das zähfliessende Arbeitsmedium verdrängt werden muss. Dabei wird das Arbeitsmedium in der Drehrichtung des Bremsrotors mit hoher Bremswirkung von dessen Schaufeln in einen Rotorgehäusebereich hoher Stau- bzw. Reibwirkung gedrängt und dabei zwischen den Schaufeln und der Gehäusewand eingequetscht, wofür erheblich mehr Arbeit vom Bremsrotor geleistet werden muss, als in der anderen Drehrichtung mit niedriger Bremswirkung, wo das zähfliessende Arbeitsmedium von den Schaufeln des Bremsrotors in einen Gehäusebereich niedriger Stau- bzw. Reibwirkung geschaufelt wird, wodurch nur mehr eine Bremswirkung durch die Reibung zwischen Medium und Gehäuse bzw. Bremsrotor, ohne bzw. mit geringerem Quetscheffekt, vorhanden ist.

Dabei versteht man im Sinne der Erfindung unter einem zähfliessenden Arbeitsmedium ein Arbeitsmedium mit einer kinematischen Viskosität in der Grössenordnung von $10^3$ cst und darüber. Besonders günstige Bremseffekte lassen sich durch die Verwendung von zähfliessenden Arbeitsmedien mit einer Viskosität in der Grössenordnung von $10^4$ cst, beispielsweise im Bereich $4 \cdot 10^4$ - $8 \cdot 10^4$ cst, erreichen.

Als bevorzugte Arbeitsmedien werden erfindungsgemäss solche verwendet, deren kinematische Vis-

kosität vorzugsweise im Temperaturbereich von –30°C bis 50°C nur wenig temperaturabhängig ist, vorzugsweise derart, dass sich bei gleichem Füllstand des Arbeitsmediums und bei gleicher Beschaufelung die Bremsmomente im obigen Temperaturbereich maximal um 10% ändern. Als derartige Arbeitsmedien eignen sich insbesondere vollsynthetische, zähfliessende Werkstoffe, beispielsweise Silikonöle hoher Viskosität.

Aufgrund der hohen Viskosität des Arbeitsmediums und der erfindungsgemässen Beschaufelung reicht schon eine geringe Drehzahl des Bremsrotors aus, um die gewünschte Bremswirkung zu erzielen. Daher ist es gemäss einer bevorzugten Ausführungsform der Erfindung möglich, dass der Bremsrotor und die Seiltrommel jeweils auf einer gemeinsamen Welle angeordnet sind. Ein Übersetzungsgetriebe ist also nicht nötig (wenn auch möglich), wodurch ein einfacher und wartungsarmer Aufbau gewährleistet ist.

Die Bremswirkung der erfindungsgemässen Bremse setzt schon bei niedrigen Drehzahlen ein. Dies geschieht jedoch nicht ruckartig, sondern in einer gedämpften Weise, d.h. so, dass ein stossfreies Anfahren des Skiläufers von der Station weg oder ein stossfreies gedämpftes Anziehen etwa nach einem Flachstück der Schlepptrasse in einem folgenden Seilstück möglich ist. Ein besonderer Vorteil der erfindungsgemässen Bremseinrichtung liegt auch darin, dass zur Erzielung einer unterschiedlichen Bremswirkung je nach Drehrichtung der Welle nur ein Bremsrotor erforderlich ist.

Eine weitere bevorzugte Ausführungsform der Erfindung sieht vor, dass bei einem Radialrotor die am nächsten zur Welle liegenden Innenkanten der Schaufeln in einem Radialabstand von der Welle liegen, dass der Gehäusebereich geringerer Stau- bzw. Reibwirkung radial innerhalb der Innenkanten der Schaufeln angeordnet ist, und dass der Gehäusebereich höherer Stau- bzw. Reibwirkung radial ausserhalb der Schaufel liegt. Eine derartige Anordnung ermöglicht eine äusserst schmale Bauweise. Dabei ist der Gehäusebereich hoher Stau- bzw. Reibwirkung im wesentlichen jener Bereich, der durch den Bremsrotor und die radial äusserste, eventuell mit Stauorganen versehene Gehäuseinnenwand begrenzt wird. Dagegen liegt der Gehäusebereich niedriger Stau- bzw. Reibwirkung radial innerhalb der Bremsrotorschaufeln, zwischen diesen und der Welle.

Bei Verwendung eines Axialrotors kann die unterschiedliche Bremswirkung in beiden Drehrichtungen dadurch erzielt werden, dass der Abstand der zum Gehäusebereich höherer Stau- bzw. Reibwirkung weisenden Kanten der Schaufeln zur Gehäusewand kleiner ist als der Abstand der zum Gehäusebereich geringerer Stau- bzw. Reibwirkung wirkenden Kanten der Schaufeln zur Gehäusewand, wobei allenfalls im Gehäusebereich hoher Stau- bzw. Reibwirkung Stauorgane, vorzugsweise Staurippen, angeordnet sind.

Ein Ausführungsbeispiel der erfindungsgemässen Bremse wird anschliessend anhand der Figuren der Zeichnungen näher erläutert.

Es zeigen:

Fig. 1 eine Ein- und Ausziehvorrichtung von Schleppseilen mit einer erfindungsgemässen Bremse in axialem Mittelschnitt während der Ausziehphase,

Fig. 2 den Querschnitt nach der Linie A-B der Fig. 1 während der Ausziehphase und

Fig. 3 den Querschnitt nach der Linie A-B der Fig. 1 während der Einziehphase.

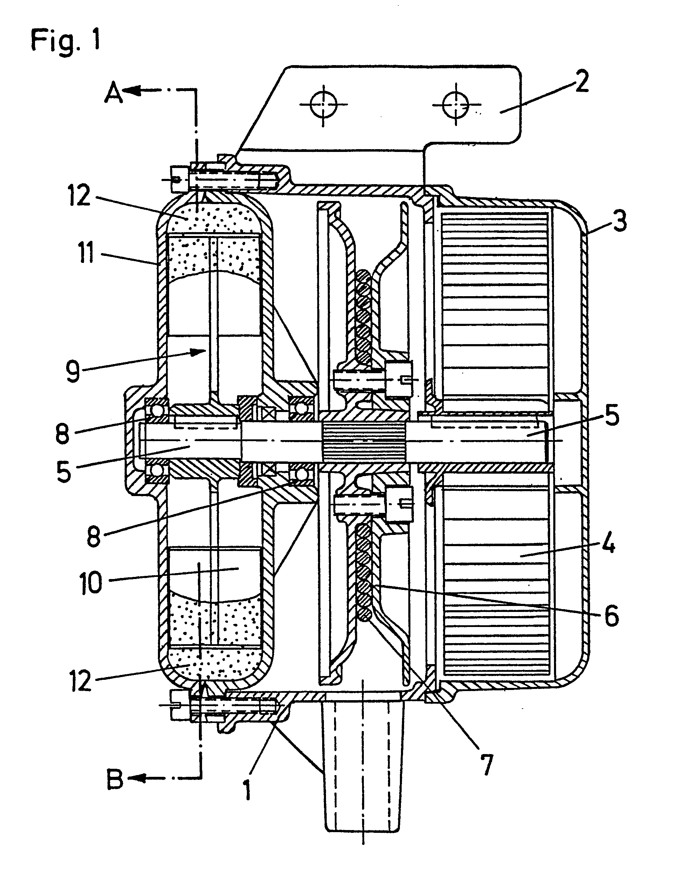

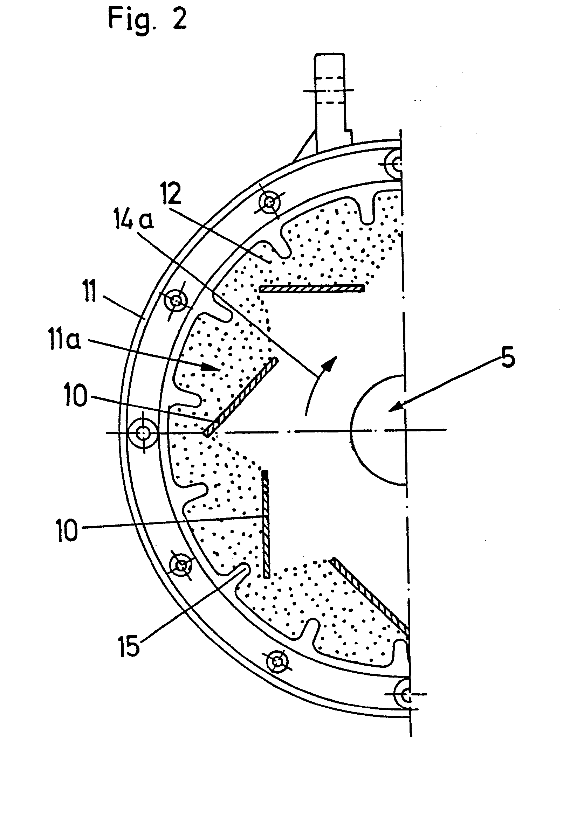

Die Ein- und Ausziehvorrichtung nach Fig. 1 bis 3 besteht aus einem Gehäuse 1, das über die Laschen 2 und das nicht dargestellte Gehängegestänge mit dem Umlaufseil verbunden ist. Das Gehäuse 1 ist seitlich durch das Federgehäuse 3 erweitert, das die Rückstellfeder 4 enthält. Diese Feder 4, die als spiralfeder ausgebildet ist, ist einerseits am Gehäuse 3, andererseits an einem auf der Welle 5 sitzenden Federaufwicklungsdorn befestigt, der über eine Kupplung mit der Seiltrommel 6 für das Schleppseil verbunden ist. Die Welle 5 ist in Kugellagern 8 gelagert und ist starr mit dem Bremsrotor 9 und mit der Seiltrommel 6 verbunden. Der Bremsrotor 9 läuft in einem geschlossenen, durch einen Dichtring nach aussen abgedichteten Gehäuse 11, in dem sich als zähfliessendes Arbeitsmedium 12 ein Silikonöl hoher Viskosität befindet, und weist erfindungsgemäss schräg zur Radialebene des Bremsrotors 9 gestellte Schaufeln 10 auf, wie dies in Fig. 2 dargestellt ist.

Fig. 2 zeigt einen Querschnitt nach der Linie A-B der Fig. 1. Der Pfeil 14a zeigt die Drehrichtung des Bremsrotors 9 mit seinen Schaufeln 10 während der Ausziehphase des Schleppseiles 7 an. Dabei wird das zähfliessende Arbeitsmedium 12 von den erfindungsgemäss schräg zur Radialebene des Bremsrotors 9 gestellten Schaufeln 10 in einen Gehäusebereich 11a hoher Stau- bzw. Reibwirkung gedrängt. Die Innenwand des Gehäuses 11 ist mit Staurippen 15 versehen, wodurch Kammern bzw. Taschen entstehen. Das zähfliessende Arbeitsmedium 12 kann nicht so schnell aus diesen Kammern entweichen wie die Schaufeln 10 nachdrücken, so dass eine Art Kompression bzw. Rückstau entsteht, der zu einer hohen Bremswirkung führt.

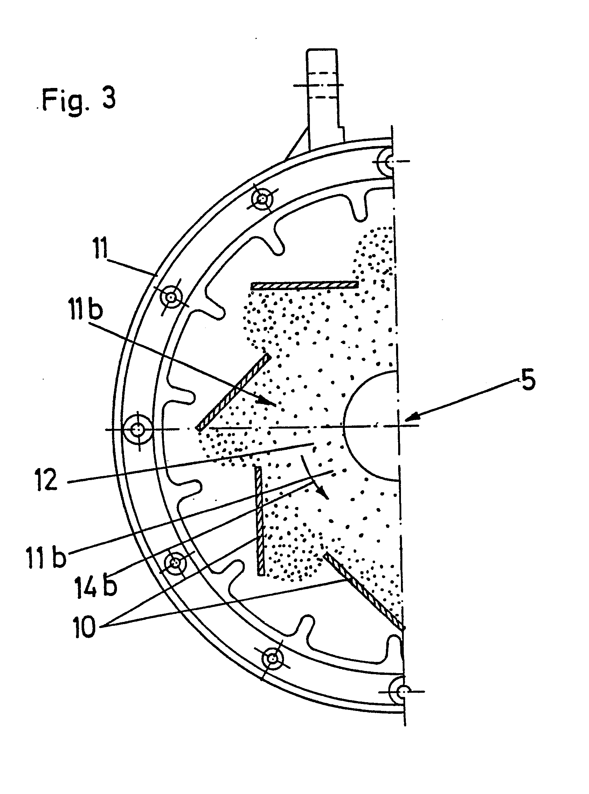

Fig. 3 zeigt denselben Querschnitt wie Fig. 2, jedoch während der Einziehphase des Schleppseiles 7. Der Pfeil 14b gibt die Drehrichtung des Bremsrotors 9 mit seiner zur Welle 5 offenen Beschaufelung an. Durch die schräg zur Radialebene des Bremsrotors 9 gestellten Schaufeln 10, die in einem bestimmten Abstand von der Welle 5 enden, wird das zähfliessende Arbeitsmedium 12 in Richtung zum Wellenmittelpunkt in einen Gehäusebereich 11b geringer Stau- bzw. Reibwirkung geschaufelt.

Wegen des Wegfallens der Bremswirkung aufgrund des Rückstaus in den Kammern zwischen der axial äussersten Gehäusewand und den Schaufeln 10, ist die Bremswirkung in dieser Drehrichtung geringer und nur noch durch die Wandreibung zwischen dem zähfliessenden Medium 12 und dem Gehäuse 11 bzw. den Schaufeln 10 gegeben.

Die Erfindung ist jedoch nicht auf das oben beschriebene Ausführungsbeispiel beschränkt. So kann z.B. auch ohne Staurippen an der Gehäuseinnenwand, allein durch den verschiedenen Abstand von Rotorschaufeln von der Gehäusewand in den jeweiligen Gehäusebereichen unterschiedlicher Stau- bzw. Reibwirkung, eine von der Drehrichtung des Bremsrotors abhängige Bremswirkung erzielt werden.

Weiters ist es möglich, anstelle des oben beschriebenen Radialrotors einen Axialrotor zu verwenden, wobei hier die je nach Drehrichtung unterschiedliche Bremswirkung z.B. durch einen verschiedenen Abstand der Gehäusewand von den Schaufeln das Rotors in den Gehäusebereichen unterschiedlicher Stau- bzw. Reibwirkung erzielt wird.

Auch die Form der Schaufeln des Bremsrotors ist nicht auf die oben gezeigten geradflächigen Schaufeln beschränkt. Die Schaufeln können auch gewölbt bzw. gebogen sein und zur Verstellung der Bremswirkung unterschiedlich schräg gestellt sein bzw. in der Anzahl variiert werden.

Eine Änderung der Bremswirkung lässt sich ausserdem auf einfache Weise zur Änderung des Füllstandes des zähfliessenden Arbeitsmediums im Gehäuse oder beispielsweise durch Verwendung eines Arbeitsmediums anderer Viskosität erreichen.

## Patentansprüche

1. Bremse mit mindestens einem Bremsrotor (9), der in einem geschlossenen Rotorgehäuse (11) läuft, in dem sich ein Arbeitsmedium (12) befindet, wobei eine von der Drehrichtung des Bremsrotors (9) abhängige Bremswirkung erfolgt, insbesondere für Einziehvorrichtungen von Schleppseilen bei Schleppliften, dadurch gekennzeichnet, dass das nur einen Teil des Gehäuseinneren einnehmende Arbeitsmedium (12) zähfliessend ist und dass die Schaufeln (10) des Bremsrotors (9) derart schräg zur Radialebene des Bremsrotors (9) und/oder schräg zu dessen Drehachse (5) gestellt sind, dass das zähfliessende Arbeitsmedium (12) je nach Drehrichtung in Rotorgehäusebereiche (11a, 11b) unterschiedlicher Stau- bzw. Reibwirkung gedrängt wird.

2. Bremse nach Anspruch 1, dadurch gekennzeichnet, dass die kinematische Viskosität des zähfliessendes Arbeitsmediums (12) in der Grössenordnung von $10^3$ cst und darüber liegt.

3. Bremse nach Anspruch 1 oder 2, dadurch gekennzeichnet, dass die kinematische Viskosität des zähfliessenden Arbeitsmediums (12) in der Grössenordnung von $10^4$ cst liegt.

4. Bremse nach einem der Ansprüche 1 bis 3, dadurch gekennzeichnet, dass die kinematische Viskosität des zähfliessenden Arbeitsmediums (12) in der Grössenordnung von $4.10^4$ - $8.10^4$ cst liegt.

5. Bremse nach einem der Ansprüche 1 bis 4, dadurch gekennzeichnet, dass die kinematische Viskosität des zähflüssigen Arbeitsmediums (12) in einem Temperaturbereich von −30°C bis 50°C im wesentlichen temperaturunabhängig ist.

6. Bremse nach einem der Ansprüche 1 bis 5, dadurch gekennzeichnet, dass das zähfliessende Arbeitsmedium ein Silkonöl (12) ist.

7. Bremse nach einem der Ansprüche 1 bis 6, dadurch gekennzeichnet, dass der Bremsrotor (9) und die Seiltrommel (6) jeweils auf einer gemeinsamen Welle (5) angeordnet sind.

8. Bremse nach einem der Ansprüche 1 bis 7, dadurch gekennzeichnet, dass in den Rotorgehäusebereichen (11a) höherer Stau- bzw. Reibwirkungen Stauorgane, vorzugsweise Staurippen (15) angeordnet sind, gegen die die Schaufeln (10) des sich in der Drehrichtung mit höherer Bremswirkung drehenden Bremsrotors (9) das zähflüssige Arbeitsmedium (12) drängen.

9. Bremse nach einem der Ansprüche 1 bis 8, dadurch gekennzeichnet, dass bei einem Radialrotor die am nächsten zur Welle (5) liegenden Innenkanten der Schaufeln (10) in einem Radialabstand von der Welle (5) liegen, dass der Rotorgehäusebereich (11b) geringerer Stau- bzw. Reibwirkung radial innerhalb der Innenkanten der Schaufeln angeordnet ist, und dass der Rotorgehäusebereich (11a) höherer Stau- bzw. Reibwirkung radial ausserhalb der Schaufeln (10) liegt.

10. Bremse nach einem der Ansprüche 1 bis 8, dadurch gekennzeichnet, dass bei einem Axialrotor der Abstand der zum Rotorgehäusebereich (11a) höherer Stau- bzw. Reibwirkung weisenden Kanten (10) zur Gehäusewand kleiner ist als der Abstand der zum Gehäusebereich (11b) geringerer Stau- bzw. Reibwirkung weisenden Kanten der Schaufeln (10) zur Gehäusewand.

## Claims

1. A brake comprising at least one braking rotor (9) which runs in a closed rotor housing (11) in which there is a working medium (12), wherein there is a braking action which is dependent on the direction of rotation of the braking rotor (9), in particular for retraction units for two cables in tow lifts, characterized in that the working medium (12) which occupies only a part of the interior of the housing is viscous and that the vanes (10) of the braking rotor (9) are disposed inclinedly with respect to the radial plane of the braking rotor (9) and/or the axis of rotation (5) thereof in such a way that the viscous working medium (12), depending on the direction of rotation, is urged into regions of the rotor housing (11a, 11b) with different damming or frictional effects.

2. A brake according to claim 1, characterized in that the kinematic viscosity of the viscous working medium (12) is of the order of magnitude of $10^3$ cst and above.

3. A brake according to claim 1 or claim 2, characterized in that the kinematic viscosity of the viscous working medium (12) is of the order of magnitude of $10^4$ cst.

4. A brake according to one of claims 1 to 3, characterized in that the kinematic viscosity of the viscous working medium (12) is of the order of magnitude of from $4.10^4$ - $8.10^4$ cst.

5. A brake according to one of claims 1 to 4, characterized in that the kinematic viscosity of the viscous working medium (12) is substantially independent of temperature, in a temperature range of from −30°C to 50°C.

6. A brake according to one of claims 1 to 5, characterized in that the viscous working medium is a silicone oil (12).

7. A brake according to one of claims 1 to 6, characterized in that the braking rotor (9) and the cable drum (6) are respectively disposed on a common shaft (57.

8. A brake according to one of claims 1 to 7, characterized in that disposed in the regions (11a) of the rotor housing, with higher levels of damming or frictional effects, are baffle members, preferable baffle ribs (15) against which the viscous working medium (12) is urged by the vanes (10) of the braking rotor (9) when it rotates in the direction of rotation with a higher level of bracking effect.

9. A brake according to one of claims 1 to 8, characterized in that, with a radial rotor, the inside edges of the vanes (10) which are closest to the shaft (5), are at a radial spacing from the shaft (5), that the rotor housing region (11b) with the lower level of damming or frictional effect is disposed radially inwardly of the inside edges of the vanes, and that the rotor housing region (11a) with the higher level of damming or frictional effect is disposed radially outwardly of the vanes (10).

10. A brake according to one of claims 1 to 8, characterized in that, with an axial rotor, the spacing of the edges (10) which face towards the housing region (11a) with the higher level of damming or frictional effect, relative to the wall of the housing, is smaller than the spacing of the edges of the vanes (10), which face towards the housing region (11b) with the lowel level of damming of frictional effect, relative to the wall of the housing.

**Revendications**

1. Frein qui comprend, au moins, un rotor (9) qui tourne dans un carter fermé (11), renfermant un milieu de travail approprié (12), la disposition étant telle qu'il se produit un effet de frainage dans le sens de la rotation dudit rotor (9), notamment pour installations d'enroulement des câbles enrouleurs des téléskis, caractérisé en ce que le milieu (12) qui n'occupe qu'une partie du volume intérieur du carter, est visqueux et en ce que les aubes (10) du rotor (9) sont orientées, par rapport au plan radial dudit rotor (9) et/ou à son axe de rotation(5), de telle manière que le milieu visqueux (12) est, selon le sens de la rotation, soumis à des effets de compression et de friction différents dans certaines régions (11a, 11b) du carter (11).

2. Frein selon la revendication 1, caractérisé en ce que la viscosité cinématique du milieu (12) est de l'ordre de $10^3$ cSt et au-dessus.

3. Frein selon la revendication 1 ou 2, caractérisé en ce que la viscosité cinématique du milieu visqueux (12) est de l'ordre de $10^4$ cSt.

4. Frein selon l'une quelconque des revendications 1 à 3, caractérisé en ce que la viscosité cinématique du milieu (12) est d'un ordre de grandeur compris entre $4.10^4$ et $8.10^4$ cSt.

5. Frein selon l'une quelconque des revendications 1 à 4, caractérisé en ce que la viscosité cinématique du milieu visqueux (12) est essentiellement indépendante de la température dans une plage de températures comprise entre −30°C et +50°C.

6. Frein selon l'une quelconque des revendications 1 à 5, caractérisé en ce que ce milieu visqueux (12) est une huile de silicone.

7. Frein selon l'une quelconque des revendications 1 à 6, caractérisé en ce que le rotor de frein (9) et le tambour de câble (6) sont montés sur un arbre commun (57.

8. Frein selon l'une quelconque des revendications 1 à 7, caractérisé en ce que dans les régions (11a) du carter où s'exercent des effets de friction plus intenses sont disposés des organes de retenue, de préférence des nervures (15) qui refoulent le milieu visqueux (12) contre le rotor (9) lorsque celui-ci tourne dans le sens d'un freinage plus puissant.

9. Frein selon l'une quelconque des revendications 1 à 8, caractérisé en ce que, sur un rotor radial, les bords intérieurs des aubes (10) les plus proches de l'arbre (5) sont à une certaine distance radiale de l'arbre (5), en ce que la région (11b) du carter où les effets de friction et de rétention sont relativement faibles est située radialement à l'intérieur des bords intérieurs des aubes, et en ce que la région (11a) du carter dans laquelle s'exercent les effets de friction et de rétention les plus forts est située radialement à l'extérieur des aubes (10).

10. Frein selon l'une quelconque des revendications 1 à 8, caractérisé en ce que, sur un rotor axial, l'espacement entre les bords (10) de la paroi orientés vers la région (11a) du carter où la friction est plus élevée, est plus petit que l'espacement des bords des aubes (10) orientés vers la région (11b) du carter où l'effet de friction est plus faible.

## Fig. 1

Fig. 2

Fig. 3